(19) Europäisches Patentamt
European Patent Office
Office européen des brevets

(11) EP 4 122 965 A1

(12) **EUROPEAN PATENT APPLICATION**
published in accordance with Art. 153(4) EPC

(43) Date of publication:
**25.01.2023 Bulletin 2023/04**

(21) Application number: **21772606.6**

(22) Date of filing: **11.03.2021**

(51) International Patent Classification (IPC):
***C08F 299/08** (2006.01)* ***C10M 107/38** (2006.01)*
***C10M 107/50** (2006.01)* ***C09K 5/14** (2006.01)*

(52) Cooperative Patent Classification (CPC):
**C08F 299/08; C09K 5/14; C10M 107/38; C10M 107/50**

(86) International application number:
**PCT/JP2021/009724**

(87) International publication number:
**WO 2021/187294 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2020 JP 2020046244**

(71) Applicant: **VALQUA, Ltd.**
**Shinagawa-ku**
**Tokyo 141-6024 (JP)**

(72) Inventors:
- **NISHI Ryosuke**
  **Gojo-shi, Nara 637-0014 (JP)**
- **ARAYA Naoko**
  **Tokyo 141-6024 (JP)**
- **YOSHIYAMA Tomoaki**
  **Machida-shi, Tokyo 194-0215 (JP)**

(74) Representative: **Dehns**
**St. Bride's House**
**10 Salisbury Square**
**London EC4Y 8JD (GB)**

# (54) PASTE

(57) An embodiment of the present invention relates to a paste which includes a perfluoropolyether (A) having two or more ethylenically unsaturated bonds in the molecule, a polysiloxane (B) having two or more ethylenically unsaturated bonds in the molecule, and a radical initiator (C).



Processed by Luminess, 75001 PARIS (FR)

## Description

### Technical Field

An embodiment of the present invention relates to a paste.

### Background Art

In order to ensure, for example, a prescribed movement, wear resistance, and seizure resistance of members such as sliding members, brake members and vibration suppression/absorption members, pastes (also referred to as greases) are applied between members.

Furthermore, a heat radiating (thermally conductive) material is used between heating elements and heat radiating parts in, for example, electronic components in order to efficiently transfer heat from the heating element to the heat radiating part. These heat radiating materials mainly come in two forms, namely sheet types and paste types. For sheet type heat radiating materials, thermal contact resistance will increase due to factors such as poor conformability with the mating surface of, for example, the heating element or the heat radiating part, and due to the sheet itself requiring a certain thickness. As such, paste type heat radiating materials are used due to factors such as the paste can be thinned during the application thereof, conformability with mating surfaces is good, and heat dissipation performance is excellent.

In order to achieve the purpose desired of these pastes, the pastes are required to remain in a prescribed location. However, the viscosity of conventional pastes decrease as the temperature increases and the paste readily flows out of the prescribed location (hereinafter also referred to as "pump-out"). Due to this pump-out, the desired purpose of the pastes is not achieved. Furthermore, in conventional pastes, deterioration and solidification of the paste itself occurs at high temperatures and this also results in the desired purpose of the paste not being achieved.

Further, if the viscosity of the paste is low during the application thereof, then workability of the paste such as coatability increase as does productivity and a prescribed amount, in particular a small amount of paste can readily be placed in a prescribed location. Therefore, for example, in the case of the heat radiating material, the thickness of the paste layer can be made thin and heat dissipation performance can be improved. Note that in order to suppress the flowing-out of the paste formed at a prescribed location from that location, there are cases where the paste is used once the paste has been heat thickened.

As stated above, it is desirable for the paste to have a low viscosity during the application thereof; however, if the viscosity is low then pump-out of the paste readily occurs even once heat thickening has been performed as described above. There are also problems such as the difficulty in maintaining the prescribed performance of the paste over long periods.

In order to solve the aforementioned problems, patent Literatures 1 and 2 each describe a silicone paste in which a silicone compound is used as a base oil.

### Citation List

#### Patent Literature

[Patent Literature 1] JP 2013-227374 A
[Patent Literature 2] JP 2017-165791 A


### Summary of Invention

#### Technical Problem

In recent years, the temperature at which pastes are used has been increasing (e.g., 200°C or more), for example, there are cases where, along with the further miniaturization and increased output of electrical components such as power modules, electronic components are operated at high temperatures (approximately 200°C or more).

However, when conventional silicone pastes are used under such high temperatures, the paste itself deteriorates and the desired purpose of the paste cannot be achieved.

One embodiment of the present invention provides a paste which has a heat resistance of 200°C or more, a low initial viscosity, and for which pump-out can be suppressed after heat thickening.

Note that initial viscosity is the viscosity at the time the paste is prepared before the paste is heat thickened and is usually the viscosity at the time of applying the paste.

Solution to Problem

As a result of extensive research carried out by the present inventors to solve the aforementioned problems, it was found that the problems could be solved by the following configurational examples and thereby the present invention was completed.
The configurational examples of the present invention are as described below.

[1] A paste comprising a perfluoropolyether (A) having two or more ethylenically unsaturated bonds in the molecule, a polysiloxane (B) having two or more ethylenically unsaturated bonds in the molecule, and a radical initiator (C) .
[2] The paste according to [1], wherein the content of the perfluoropolyether (A) is 30 to 96% by mass with respect to a total 100% by mass of the content of the perfluoropolyether (A) and the polysiloxane (B).
[3] The paste according to [1], comprising a compound (D) having two or more ethylenically unsaturated bonds in the molecule, wherein the compound (D) is other than the perfluoropolyether (A) and the polysiloxane (B).
[4] The paste according to any one of [1] to [3], comprising a thermally conductive filler (E).
[5] The paste according to any one of [1] to [4], wherein the viscosity measured at 23°C with a Brookfield viscometer is 500 Pa·s or less.

Advantageous Effects of Invention

According to one embodiment of the present invention, since a paste which has a heat resistance of 200°C or more, a low initial viscosity, and for which pump-out can be suppressed after heat thickening (example: to at least the initial temperature of the radical initiator) can be provided, the desired performance of a member on which the paste is used can be maintained over a long period.
Further, according to one embodiment of the present invention, a paste can be provided which has effectively no (i.e., extremely long) pot life provided that the storage environment is, for example, at room temperature.
Note that the paste according to one embodiment of the present invention remains paste state and does not solidify even at high temperatures. Thus, the desired performance of members on which the paste is used can be maintained even under high temperatures.
The paste according to the present invention is defined such that when a 0.2 g sample of the paste is compressed at room temperature (23°C) under a pressure of 1 MPa, the thickness of the sample becomes 200 μm or less.
The method of measuring the thickness of this sample is specifically described in the following examples.

Description of Embodiments

<<Paste>>

The paste according to one embodiment of the present invention (hereinafter also referred to as the "present paste") comprises a perfluoropolyether (A) (hereinafter also referred to as "component (A)", this also applies to the other components) having two or more ethylenically unsaturated bonds in the molecule, a polysiloxane (B) having two or more ethylenically unsaturated bonds in the molecule, and a radical initiator (C).

<Perfluoropolyether (A)>

Provided that a component (A) is a perfluoropolyether with two or more ethylenically unsaturated bonds in the molecule, there are no particular limitations thereon.
By using such a component (A), a paste with excellent heat resistance can be obtained.
One type of the component (A) or two or more types thereof may be used in the present paste.
The ethylenically unsaturated bond of the present invention may include, for example, alkenyl groups having 2 to 8 carbon atoms such as a vinyl group, a methyl vinyl group, an allyl group, a propenyl group, an isopropenyl group, a butenyl group, a pentenyl group, a hexenyl group, and a heptenyl group, as well as a vinylphenyl group, a (meth)acryloyl group, an allyloxy group, a styryl group, and a propargyl group. From thereamong, alkenyl groups are preferable, alkenyl groups having 2 to 4 carbon atoms are more preferable, and vinyl groups are especially preferable.
Each component having an ethylenically unsaturated bond may have two or more types thereof provided that no particular limitations are imposed.
Preferable examples of the component (A) include the compounds set forth in JP2003-183402, JPH11-116684, JPH11-116685, and JP2015-67737.
The component (A) may be, for example, the compound represented by the formula (1) below.

$$Z^1\text{-}(X)_p\text{-}(Rf\text{-}Q)_a\text{-}Rf\text{-}(X)_p\text{-}Z^2 \qquad (1)$$

X is independently a $-CH_2-$, $-CH_2O-$, $-CH_2OCH_2-$, $*-Si(R^2)_2-Ph-$ (where Ph is a phenyl group), $*-Y-NR^2SO_2-$ or $*-Y-NR^1-CO-$(note that Y is a $-CH_2-$ or $*-Si(R^2)_2-Ph-$ and that the * moiety is bound to $Z^1$ or $Z^2$).

Rf is a divalent perfluoropolyether group (divalent perfluorooxyalkylene group).

p is independently 0 or 1. a is an integer of 0 or more, preferably an integer of 0 to 10, and more preferably an integer of 1 to 6.

Q is a group represented by the formula (2), (3), or (4) below.

$R^2$ is a substituted or unsubstituted monovalent hydrocarbon group having 1 to 10 carbon atoms, particularly 1 to 8 carbon atoms, and includes, for example, alkyl groups such as a methyl group, an ethyl group, a propyl group, an isopropyl group, a butyl group, an isobutyl group, a t-butyl group, a pentyl group, a hexyl group, an octyl group, and a decyl group; cycloalkyl groups such as a cyclopentyl group, a cyclohexyl group, and a cycloheptyl group; alkenyl groups such as a vinyl group, an allyl group, a propenyl group, an isopropenyl group, a butenyl group, and a hexenyl group; aryl groups such as a phenyl group, a tolyl group, a xylyl group, and a naphthyl group; aralkyl groups such as a benzyl group, a phenylethyl group, and a phenylpropyl group; and groups in which some or all of the hydrogen atoms of these groups are substituted with, for example, a halogen atom such as a chloromethyl group, a chloropropyl group, a bromoethyl group, and fluoro-substituted alkyl groups such as a 3,3,3-trifluoropropyl group and a 6,6,6,5,5,4,4,3,3-nonafluorohexyl group.

$R^1$ is a hydrogen atom or a substituted or unsubstituted monovalent hydrocarbon group having 1 to 10 carbon atoms, particularly 1 to 8 carbon atoms similar to the group exemplified for $R^2$ , and $R^1$ includes a hydrogen atom or groups similar to $R^2$. $R^1$ includes, for example, alkyl groups such as a methyl group, an ethyl group, a propyl group, and an isopropyl group; cycloalkyl groups such as a cyclohexyl group; alkenyl groups such as a vinyl group and an allyl group; aryl groups such as a phenyl group and a tolyl group; and groups in which some of the hydrogen atoms of these groups are substituted with, for example, a halogen atom such as a chloromethyl group, a chloropropyl group, and fluoro-substituted alkyl groups such as a 3,3,3-trifluoropropyl group and a 6,6,6,5,5,4,4,3,3-nonafluorohexyl group.

$Z^1$ and $Z^2$ are both independently ethylenically unsaturated bond-containing groups and may be an -Si (ethylenically unsaturated bond-containing group) $(R')_2$.

The ethylenically unsaturated bond-containing group is preferably a monovalent alkenyl group, more preferably a monovalent alkenyl group with 2 to 4 carbon atoms, and particularly preferably a monovalent vinyl group.

R' is independently a substituted or unsubstituted monovalent hydrocarbon group, specific examples of which include alkyl groups such as a methyl group, an ethyl group, a n-propyl group, an i-propyl group, a n-butyl group, an i-butyl group, a t-butyl group, a pentyl group, and a hexyl group; aryl groups such as a phenyl group, a tolyl group, and a xylyl group; and halogenated alkyl groups such as a 3-chloropropyl group and a 3,3,3-trifluoropropyl group. From thereamong, alkyl groups with 1 to 5 carbon atoms are preferable.

[Chem. 1]

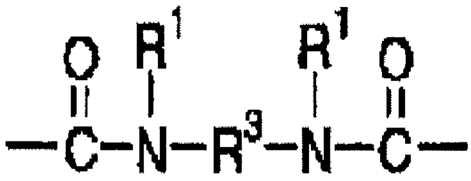

—(2)

$$-(X)_p-CH_2CH_2R^4CH_2CH_2-(X)_p-$$

—(3)

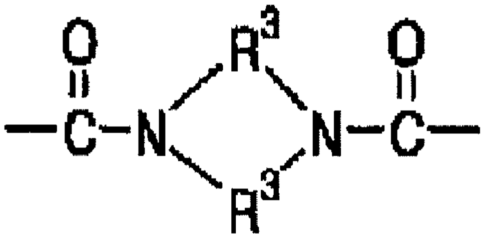

—(4)

In the formulas (2) to (4), X, p, and $R^1$ are the same as X, p, and $R^1$ in the aforementioned formula (1). $R^3$ and $R^4$ are each independently a substituted or unsubstituted divalent hydrocarbon group in which one or more intervening atoms selected from an oxygen atom, a nitrogen atom, a silicon atom, and a sulfur atom may be included within the linkage. $R^3$ in the formula (2) and $R^4$ in the formula (3) may each independently be a group represented by the formula (5) or (6) below.

[Chem. 2]

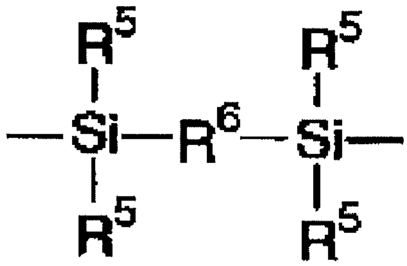

—(5)

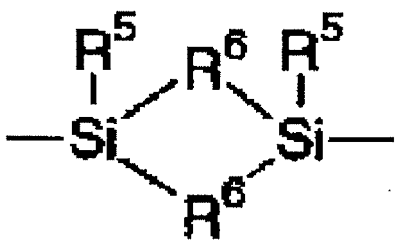

—(6)

In the formulas (5) and (6), $R^5$ is a substituted or unsubstituted monovalent hydrocarbon group and $R^6$ is a group containing at least one selected from a carbon atom, an oxygen atom, a nitrogen atom, a silicon atom, and a sulfur atom.

Provided that $R^3$ and $R^4$ are substituted or unsubstituted divalent hydrocarbon groups, there are no particular limitations thereon, but divalent hydrocarbon groups having 1 to 20 carbon atoms, particularly 2 to 10 carbon atoms are

preferable. Specifically, alkylene groups such as a methylene group, an ethylene group, a propylene group, a methylethylene group, a butylene group, and a hexamethylene group; cycloalkylene groups such as a cyclohexylene group; arylene groups such as a phenylene group, a tolylene group, a xylylene group, a naphthylene group, and a biphenylene group; groups in which some of the hydrogen atoms of these groups are substituted with, for example, a halogen atom; and a combination of these substituted or unsubstituted alkylene groups and arylene groups are exemplified.

In $R^3$ and $R^4$, when an intervening nitrogen atom is included, the nitrogen atom can be included as -NR'- (where R' is a hydrogen atom or an alkyl group or an aryl group with 1 to 8 carbon atoms, particularly 1 to 6 carbon atoms). Furthermore, when an intervening silicon atom is included, the silicon atom can be included, for example, as a linear or cyclic organosiloxane-containing group or an organosilylene group as shown below.

[Chem. 3]

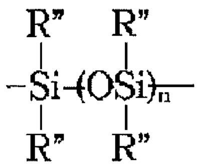
,
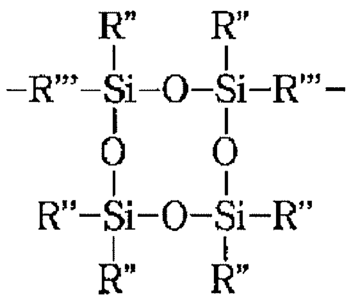
,
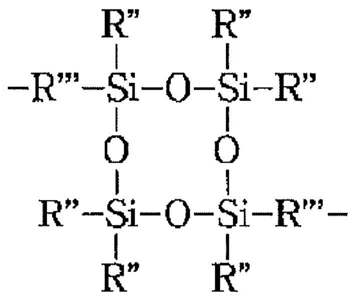

$R''$ is independently an alkyl group or an aryl group with 1 to 8 carbon atoms similar to the group exemplified for $R^2$, $R'''$ is independently an alkylene group or an arylene group with 1 to 6 carbon atoms similar to the groups exemplified for $R^3$, and n is an integer from 0 to 10, preferably from 0 to 5.

Specific examples of groups for $R^3$ and $R^4$ include the groups below.

[Chem. 4]

$-CH_2CH_2OCH_2CH_2-$ ,

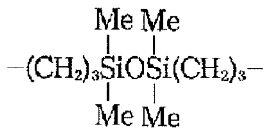
,

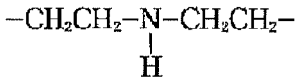
,

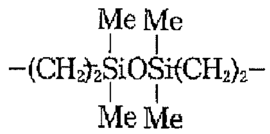
,

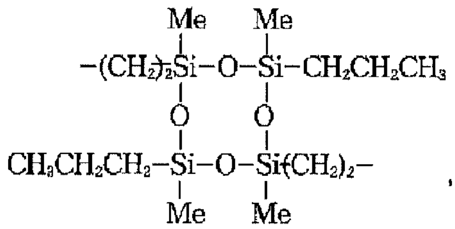
,

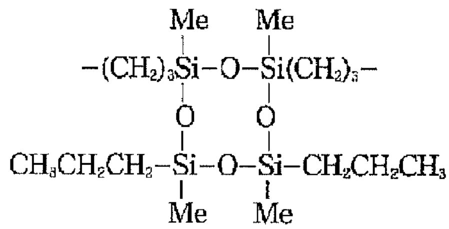
,

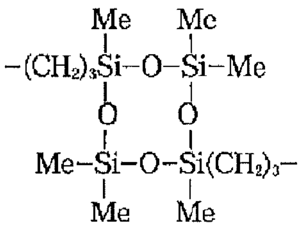
,

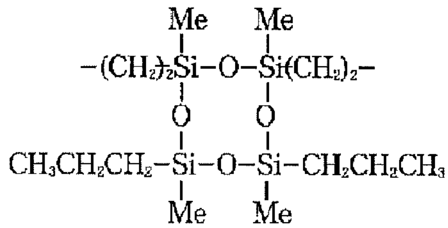
,

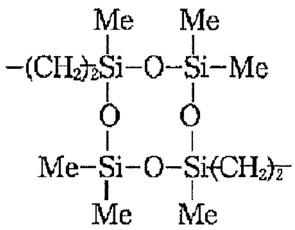
,

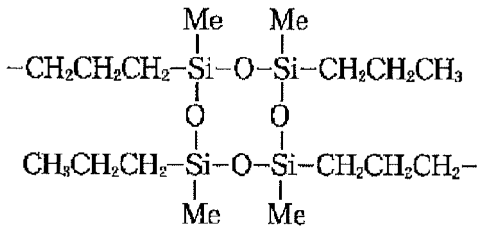

The following structures can be cited for the structure of moieties other than -C(=O)- in the formulas (2) and (4).

[Chem 5]

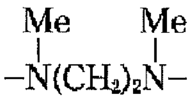 , 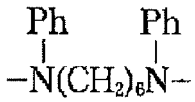 ,

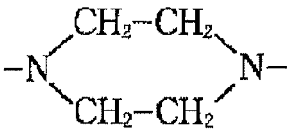 , 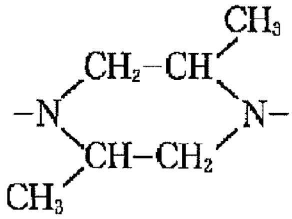 ,

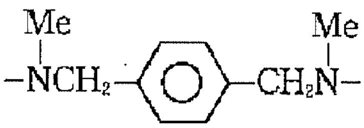 , 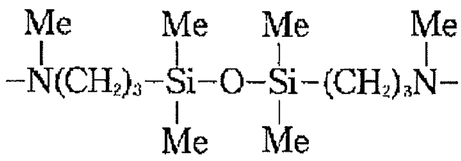 ,

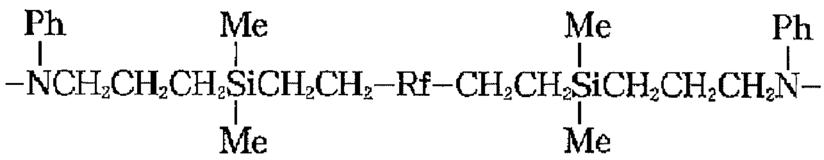 ,

(Rf is the same as before)

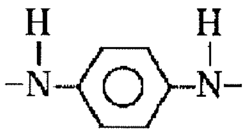 , 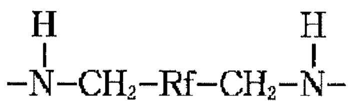 ,

(Rf is the same as before)

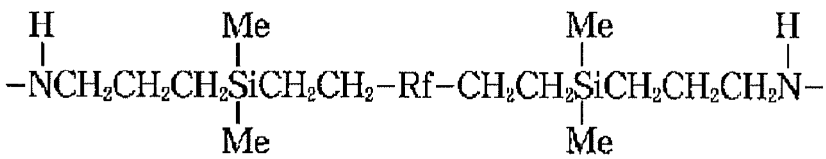 ,

(Rf is the same as before)

[Chem 6]

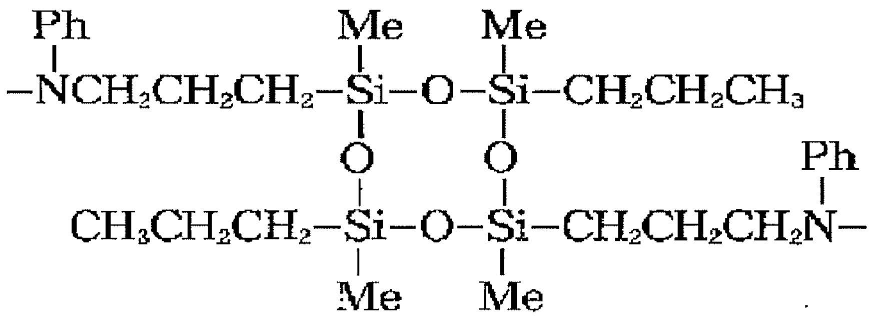

,

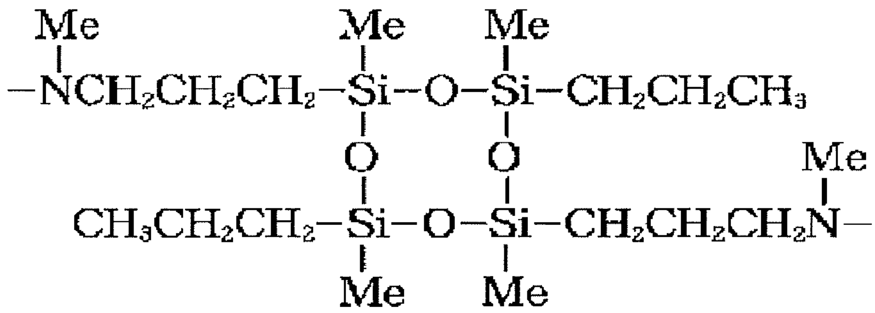

,

[Chem 7]

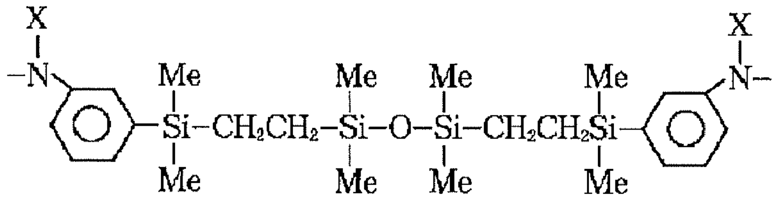

,

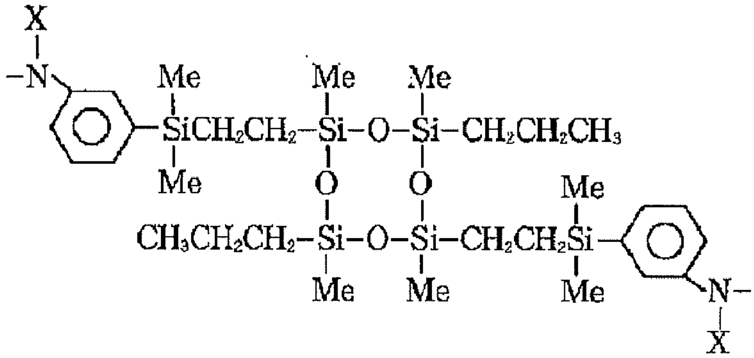

,

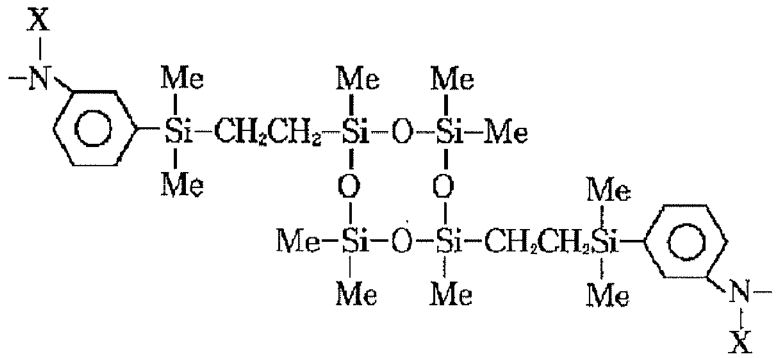

(X is a hydrogen atom, a methyl group, or a phenyl group)

$-(X)_p-(Rf-Q)_a-Rf-(X)_p-$ is preferably $-(O-R^7)_n-$ (where $R^7$ represents a perfluoroalkanediyl group, and n represents an integer of 2 or more. A plurality of $R^7$s which are present may be the same or different from each other).

The perfluoroalkanediyl group represented by $R^7$ includes, for example, a group represented by $C_mF_{2m}$ (where m is an integer of 2 or more) and may be linear or branched. The number of carbon atoms (that is, m) of the perfluoroalkanediyl group is, for example 1 to 10, preferably 2 to 6, more preferably 2 to 4, and particularly preferably 2 or 3.

A value of n is 2 or more. a value of n is for example 10 or more, preferably 40 or more, and more preferably 70 or more. Also, a value of n is for example 300 or less, preferably 200 or less, and more preferably 150 or less.

$-(O-R^7)_n-$ may be the same group as Rf below.

The compound represented by the formula (1) is preferably the compound represented by the formula (1-1) below.

$$CH_2=CH-(X)_p-(Rf-Q)_a-Rf-(X)_p-CH=CH_2 \qquad (1-1)$$

[The definition for each symbol in the formula (1-1) is the same as for the formula (1)]

Further, of the compounds represented by the formula (1-1), a compound where a is 0 is preferable and in such cases the compound can be represented by the formula (1-1-1) below.

$$CH_2=CH-(X)_p-Rf-(X)_p-CH=CH_2 \qquad (1-1-1)$$

[The definition for each symbol in the formula (1-1-1) is the same as for the formula (1)]

The following groups can be cited as specific examples of the Rf.

$$-[CF(Z)OCF_2]_p-(CF_2)_r-[CF_2OCF(Z)]_q-$$

(where Z is a fluorine atom or $-CF_3$ and p, q, and r are integers satisfying $p \geq 1$, $q \geq 1$, $2 \leq p + q \leq 200$, preferably $2 \leq p + q \leq 110$, and $0 \leq r \leq 6$.)

$$-CF_2CF_2OCF_2-(CF(CF_3)OCF_2)_s-(CF_2)_r-(CF_2OCF(CF_3))_t-CF_2OCF_2CF_2-$$

(where r, s, and t are integers satisfying $0 \leq r \leq 6$, $s \geq 0$, $t \geq 0$, $0 \leq s + t \leq 200$, preferably $2 \leq s + t \leq 110$),

$$-CF(Z)-(OCF(Z)CF_2)_u-(OCF_2)_V-OCF(Z)-$$

(where Z is a fluorine atom or $-CF_3$, and u and v are integers satisfying $1 \leq u \leq 100$ and $1 \leq v \leq 50$),

$$-CF_2CF_2-[OCF_2CF_2CF_2]_w-OCF_2CF_2-$$

(where w is an integer satisfying $1 \leq w \leq 100$.)

A compound synthesized by a conventionally known method or a commercially available product may be used as the component (A).

The viscosity of the component (A) at 23°C as measured by a Brookfield viscometer is preferably 0.1 to 100 Pa·s and more preferably 0.1 to 10 Pa·s.

When the viscosity of the component (A) is within the aforementioned range, a paste with a low initial viscosity and excellent coatability can easily be obtained. Further, when such a paste with a low initial viscosity is used as a heat dissipation paste, since a thin paste layer can easily be formed in a prescribed location such as between a heating element and a heat radiating part, for example, and a paste layer that readily conforms to the mating surface of, for example, a heating element or a heat radiating part can be easily formed, heat resistance resulting from the paste layer can be reduced, and, for example, electronic components with excellent heat dissipation characteristics can readily be obtained.

In view of, for example, being readily able to obtain a paste which has an excellent balance of heat resistance at 200°C or more, a low initial viscosity, and suppressed pump-out properties, the content of the component (A) in the present paste is preferably 30 to 96% by mass, more preferably 50 to 96% by mass, even more preferably 70 to 96% by mass, and particularly preferably 90 to 95% by mass, with respect to a total 100% by mass of the components (A) and (B) in the present paste.

<Polysiloxane (B)>

Provided that the component (B) is a polysiloxane having two or more ethylenically unsaturated bonds in the molecule, there are no particular limitations thereon.

By using such a component (B) along with the component (A) a paste even with low initial viscosity, a paste has increased flow resistance as a result of heat thickening (note that the paste does not solidify and remains in a paste state), and suppressed pump-out can be easily obtained.

Usually, even if a radical initiator is used in a paste with a low initial viscosity composed of the component (A), the increase in viscosity is very low and pump-out readily occurs even after heat thickening. However, according to one embodiment of the present invention, pump-out can be suppressed after heat thickening even for a paste with a low initial viscosity.

One type of the component (B) or two or more types thereof may be used in the present paste.

The Component (B) is preferably an organopolysiloxane having two or more ethylenically unsaturated bonds in the molecule and having an organic group bonded to a silicon atom.

There are no particular limitations on the bonding position of the ethylenically unsaturated bond.

The organic group bonded to a silicon atom includes, for example, the ethylenically unsaturated bond, a linear alkyl group, a branched alkyl group, a cyclic alkyl group, an aryl group, an aralkyl group, or an alkyl halide group.

The linear alkyl group includes groups having 1 to 20 carbon atoms, preferably 1 to 6 carbon atoms such as a methyl group, an ethyl group, a propyl group, a hexyl group, an octyl group, and a decyl group.

The branched alkyl group includes groups having 1 to 20 carbon atoms, preferably 1 to 6 carbon atoms such as an isopropyl group, an isobutyl group, a t-butyl group, and a 2-ethyl hexyl group.

The cyclic alkyl group includes groups having 3 to 20 carbon atoms such as a cyclopentyl group and a cyclohexyl group.

The aryl group includes groups having 6 to 20 carbon atoms such as a phenyl group and a tolyl group.

The aralkyl group includes groups having 7 to 20 carbon atoms such as a benzyl group, a 2-phenylethyl group, and a 2-methyl-2-phenylethyl group.

The alkyl halide group includes groups having 1 to 20, preferably 1 to 6 carbon atoms such as a 3,3,3-trifluoropropyl group, a 2-(nonafluorobutyl)ethyl group, and a 2-(heptadecafluorooctyl)ethyl group.

The organic group bound to a silicon atom is preferably a linear alkyl group, an alkenyl group, or an aryl group, more preferably, a linear alkyl group, alkenyl group, or aryl group with 1 to 6 carbon atoms, and particularly preferably a methyl group, a vinyl group, or a phenyl group.

The molecular structure of the component (B) is not particularly limited, for example, the structure can be linear, branched, linear with a branched part, or a dendrimer, and is preferably linear or linear with a branched part. The component (B) may be a single polymer having such molecular structures, a copolymer having such molecular structures, or a mixture comprising two or more of these polymers.

The component (B) may include, for example, dimethylpolysiloxane with both ends of the molecular chain blocked with dimethylvinylsiloxy groups, dimethylpolysiloxane with both ends of the molecular chain blocked with methylphenylvinyl siloxy groups, dimethylsiloxane/methylphenylsiloxane copolymer with both ends of the molecular chain blocked with dimethylvinylsiloxy groups, dimethylsiloxane/methylvinylsiloxane copolymer with both ends of the molecular chain blocked with dimethylvinylsiloxy groups, dimethylsiloxane/methylvinylsiloxane copolymer with both ends of the molecular chain blocked with silanol groups, dimethylsiloxane/methylvinylsiloxane/methylphenylsiloxane copolymer with both ends of the molecular chain blocked with silanol groups, a dimethylsiloxane/methylvinylsiloxane copolymer with both ends of the molecular chain blocked with trimethylsiloxy groups, a methyl (3,3,3-trifluoropropyl) polysiloxane with both ends of the molecular chain blocked with dimethylvinylsiloxy groups, an organosiloxane copolymer comprising a siloxane unit represented by the formula: $(CH_3)_3SiO_{1/2}$, a siloxane unit represented by the formula: $(CH_3)_2(CH_2{=}CH)SiO_{1/2}$, a siloxane unit represented by the formula: $CH_3SiO_{3/2}$, and a siloxane unit represented by the formula: $(CH_3)_2SiO_{2/2}$, and a compound represented by the formula (7) below.

[Chem. 8]

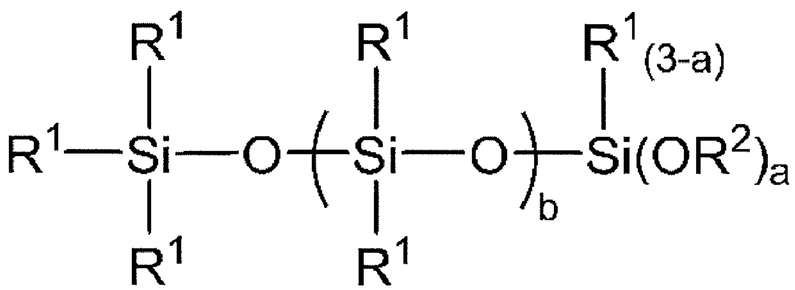

(7)

[In the formula (7), $R^1$ each independently represents a substituted or unsubstituted monovalent hydrocarbon group, $R^2$ independently represents an alkyl group, an alkoxyalkyl group, an alkenyl group, or an acyl group, b is an integer from 2 to 100, and a is an integer from 1 to 3. Note that at least two groups from among $R^1$ and $R^2$ in the formula (7) include the ethylenically unsaturated bond.]

In the formula (7), $R^1$ each independently represents a substituted or unsubstituted monovalent hydrocarbon group, preferably with 1 to 10 carbon atoms, for example, a group similar to the group cited as an example of the organic group bonded to a silicon atom. From thereamong, monovalent hydrocarbon groups with 1 to 6 carbon atoms are preferable and alkenyl groups, aryl groups and alkyl groups with 1 to 3 carbon atoms are more preferable.

In the formula (7), the alkyl or alkenyl group in $R^2$ may include, for example, a linear alkyl group, a branched alkyl group, a cyclic alkyl group, or an alkenyl group similar to the group cited as an example of the organic group bonded to a silicon atom.

In the formula (7), the alkoxyalkyl group in $R^2$ may include, for example, a group with 2 to 10 carbon atoms such as a methoxyethyl group or a methoxypropyl group.

In the formula (7), the acyl group in $R^2$ may include, for example, a group with 2 to 10 carbon atoms such as an acetyl group or an octanoyl group.

In the formula (7), b is preferably an integer from 10 to 50 and a is preferably 3.

The viscosity of the component (B) as measured at 23°C by a Brookfield viscometer is preferably 0.1 to 300 Pa·s and more preferably, 0.1 to 100 Pa·s, in view of, for example, being able to readily obtain a paste with low initial viscosity and excellent coatability.

In view of, for example, being readily able to obtain a paste which has an excellent balance of heat resistance at 200°C or more, a low initial viscosity, and suppressed pump-out properties, the content of the component (B) in the present paste is preferably 4 to 70% by mass, more preferably 4 to 50% by mass, even more preferably 4 to 30% by

mass, and particularly preferably 5 to 10% by mass with respect to a total 100% by mass of the components (A) and (B) in the present paste.

<Radical initiator (C)>

Provided that the component (C) is a radical initiator, there are no particular limitations thereon and a conventionally known radical initiator may be used.

By using the component (C) with the components (A) and (B) and reacting (crosslinking) same, a paste for which pump-out is suppressed can be obtained without the use of a platinum catalyst as used in conventional pastes and provided that, for example, the storage environment is at room temperature, a paste with effectively no (i.e., extremely long) pot life can be obtained.

One type of the component (C) or two or more types thereof may be used in the present paste.

The Component (C) may include, for example, a peroxide such as 2,5-dimethyl-2,5-di(t-butylperoxy)hexane, dicumyl peroxide, 2,4-dichlorobenzoyl peroxide, di-t-butyl peroxide, t-butyl dicumyl peroxide, benzoyl peroxide, 2,5-dimethyl-2,5-(t-butylperoxy)hexyne-3, 2,5-dimethyl-2,5-di(benzoylperoxy)hexane, α, α'-bis(t-butylperoxy-m-isopropyl)benzene, t-butyl peroxyisopropyl carbonate, di-(4-t-butylcyclohexyl)peroxydicarbonate, p-chlorobenzoyl peroxide, t-butylperoxy-2-ethylhexanoate, and t-butyl perbenzoate, or an azo compound such as 2,2'-azobis(2-methylpropionitrile), 2,2'-azobisisobutyronitrile, 2,2'-azobis(2-methylbutyronitrile), 2,2'-azobisisovaleronitrile, 2,2'-azobis(2,4-dimethylvaleronitrile), 4,4'-azobis(4-cyanovaleric acid), 1,1'-azobis(cyclohexanecarbonitrile), 2,2'-azobis(2-methylpropane), 2,2'-azobis(methyl isobutyrate), and 2,2'-azobis(2-methylpropionamidine)dihydrochloride.

From among these compounds, in view of, for example, being readily able to obtain a paste for which pump-out can be further suppressed and that has effectively no (i.e., extremely long) pot life, peroxides are preferable, t-butylperoxy-2-ethylhexanoate, 2,5-dimethyl-2,5-di(t-butylperoxy)hexane, and 2,5-dimethyl-2,5-(t-butylperoxy)hexyne-3 are more preferable, and 2,5-dimethyl-2,5-di(t-butylperoxy)hexane, and t-butylperoxy-2-ethylhexanoate are particularly preferable.

In view of being readily able to obtain a paste for which pump-out can be suppressed and that has effectively no (i.e., extremely long) pot life, the content of the component (C) in the present paste is preferably 0.05 to 30 parts by mass, more preferably 0.5 to 20 parts by mass, and particularly preferably 1 to 10 parts by mass with respect to a total 100 parts by mass of the components (A) and (B) in the present paste.

<Compound (D)>

Provided that the component (D) is a compound other than the component (A) and (B), and having two or more ethylenically unsaturated bonds in the molecule, there are no particular limitations thereon and a conventionally known compound (a co-crosslinking agent) can be used.

By using the component (D), pump-out can be better suppressed.

When using the component (D) in the present paste, one type of the component (D) or two or more types thereof may be used.

The number of ethylenically unsaturated bond in the component (D) may be two, but in view of, for example, being able to better suppress pump-out, is preferably three or more, and is particularly preferably 3 to 6.

The component (D) may include, for example, triallyl isocyanurate, triallyl cyanurate, triallylformal, triallyl trimellitate, N, N'-m-phenylene bismaleimide, dipropargyl terephthalate, diallyl phthalate, tetraallyl terephthalamide, a polyfunctional (meth)acrylate such as ethylene glycol di(meth)acrylate, or trimethylolpropane tri(meth)acrylate.

From thereamong, in view of, for example, being able to readily obtain a paste with excellent reactivity and excellent heat resistance, triallyl isocyanurate and trimethylolpropane tri(meth)acrylate are preferable.

The component (D) is preferably a monomer and may be, for example, a compound with a molecular weight of 1000 or less.

When the present paste contains the component (D), the content of the component (D) contained in the present paste is, in view of, for example, being able to better suppress pump-out, preferably 0.05 to 10 parts by mass, more preferably 0.05 to 5 parts by mass, and particularly preferably 0.1 to 3 parts by mass with respect to a total 100 parts by mass of the components (A) and (B) in the present paste.

<Thermally conductive filler (E)>

When the present paste is used as a heat dissipation paste, it is preferable for the present paste to contain a component (E).

When the present paste contains the component (E), one type of the component (E) or two or more types thereof may be used. When two or more types of the component (E) are used, two or more types of the component (E) of differing materials may be used, or two or more types of the component (E) having, for example, differing forms or average particle size may be used.

The component (E) is preferably a filler with a heat conductivity of 1 W/m·K or more.

Such a component (E), for example, may include a metal powder, metal oxide powder, metal nitride powder, metal hydroxide powder, metal oxynitride powder, metal carbide powder, or carbon material, and specific examples thereof include aluminum oxide ($Al_2O_3$), silicon oxide ($SiO_2$), magnesium oxide (MgO), beryllium oxide (BeO), zinc oxide (ZnO), silicon nitride ($Si_3N_4$), boron nitride (example: hexagonal BN or cubic BN), aluminum nitride (AlN), silicon carbide (SiC), graphite, diamond, or carbon nanotubes.

There are no particular limitations on the form of the component (E) which may be, for example, granular, scaly, or needle-shaped, but a granular form is preferable in view of the higher density filling that can be achieved therewith.

The average particle size of a granular component (E) is, for example, 0.1 to 100 μm and preferably 0.5 to 50 μm. The average particle size is the d50 value in a particle size distribution obtained by a laser diffraction/scattering method (Microtrac method).

When the present paste contains the component (E), in view of, for example, being able to readily obtain a paste with low initial viscosity and more excellent heat dissipation properties, the content of the component (E) in 100% by mass of the present paste is preferably 10 to 90% by mass and more preferably 40 to 70% by mass.

<Other components>

Other than the components (A) to (E), the present paste may contain other components, as deemed necessary and provided that the effects of the present invention are not impaired, such as plasticizers such as fluorinated oils; silane coupling agents; surfactants; cross-linking accelerators; solvents; dispersants; aging inhibitors; antioxidants; flame retardants; and pigments.

One type of these other components or two or more types thereof may be used.

The present paste preferably does not contain a platinum catalyst in view of, for example, being able to obtain a paste which has effectively no (i.e., extremely long) pot life provided that the storage environment is, for example, at room temperature.

Conventional pastes used platinum catalysts but the use of platinum catalysts shortens the pot life and the paste could not be stored over a long period.

Note that, not containing a platinum catalyst means that the content of a platinum catalyst with respect to a total 100 parts by mass of the components (A) and (B) is at most, for example, 0.0001 parts by mass and the lower limit preferably being 0 part by mass.

The component (A) usually has a perfluoroalkylether structure in the main chain and is used together with a compound (Z), which has 1 or 2 hydrosilyl groups at the molecular terminals. As such, the compound (Z) may also be used in the present paste but when a platinum catalyst is not contained in the present paste, the compound (Z) does not readily react with the component (A) and since the compound (Z) serves as a plasticizer, thickening as a result of heating is prevented, and in view of there being, for example, a tendency to promote pump-out, it is preferable that the present paste does not contain the compound (Z).

Note that not including the compound (Z) means that the content thereof with respect to a total 100 parts by mass of the components (A) and (B) is at most, for example, 0.1 parts by mass and the lower limit preferably being 0 part by mass.

<Method for preparing the present paste>

The present paste can be prepared by mixing the components (A) to (C) and as deemed necessary, the components (D), (E), and other components, then performing dispersion kneading thereon using, for example, a mixer or roller.

<Physical properties of the present paste>

The viscosity (this viscosity being the initial viscosity) of the present paste as measured at 23°C by a Brookfield viscometer is preferably low, and specifically, is preferably 500 Pa·s or less, more preferably 200 Pa·s or less, and particularly preferably 150 Pa·s or less, and is preferably 0.1 Pa·s or more.

When the present paste has an initial viscosity within the aforementioned range, a paste with excellent coatability can be readily obtained. Furthermore, when such a paste with a low initial viscosity is used as a heat dissipation paste, since a thin paste layer can readily be formed in a prescribed location such as between a heating element and a heat radiating part, and the paste readily conforms to the mating surfaces of, for example, the heating element or heat radiating part, thermal resistance due to the paste layer can be reduced and, for example, an electronic component with excellent heat dissipation characteristics can be readily obtained.

Usually, pump-out readily occurs even after heat thickening when a paste with a low initial viscosity is used;

however, according to one embodiment of the present invention, pump-out can be suppressed after heat thickening even for a paste with a low initial viscosity.

The viscosity (viscosity after heating) of the present paste is measured with a Brookfield viscometer after heating at a temperature at or above an initial temperature of the component (C) for 15 minutes followed by reducing the temperature to 23°C and the ratio of this viscosity compared to the initial viscosity (viscosity after heating/initial viscosity) is preferably 5-fold or more, more preferably 6-fold or more, even more preferably 7-fold or more. In particular, when the present paste is used in applications where suppression of pump-out is extremely important, the ratio of the viscosity after heating to the initial viscosity is preferably 50-fold or more, more preferably 70-fold or more, particularly preferably 100-fold or more.

When the ratio of the viscosity after heating to initial viscosity is within the aforementioned range a paste with an excellent balance of low initial viscosity and pump-out suppression properties can be readily obtained.

The viscosity after heating is preferably a viscosity that results in the ratio of the viscosity after heating to initial viscosity being in the aforementioned range; however, in view of, for example, being able to suppress pump-out, the viscosity is preferably 40 Pa·s or more and more preferably 50 Pa·s or more, and when the present paste is used for applications where suppression of pump-out is extremely important, specific examples of the viscosity after heating value are preferably 500 Pa·s or more, more preferably 3000 Pa·s or more, and particularly preferably 8000 Pa·s or more.

When the viscosity after heating is within the aforementioned range, pump-out can readily be suppressed after heat thickening due to the flow resistance.

The heat resistance temperature of the present paste as measured by the method described in the following example is preferably 200°C or more, and in view of, for example, further demonstrating the advantageous effects of the present invention, is more preferably 230°C or more, and even more preferably 250°C or more, and the upper limit thereof, although not particularly limited is, for example, 300°C.

<Application of the present paste>

The present paste can be used without limitations in applications in which conventional pastes have been used; however, in view of, for example, further demonstrating the effects of the present invention, the paste can suitably be used in applications in which there is the possibility of exposure to high temperatures (e.g. 200°C or more), applications in which the paste is required to stay in the form of a paste at a prescribed location even when exposed to heat (even when heated), and in particular, in applications which require the paste to have a low viscosity when forming the paste at a prescribed location by coating or pouring and which require the paste to remain in paste state at the prescribed location when exposed to heat (even when heated).

Specific applications of the paste include using the paste on members such as sliding members, brake members and vibration suppression/absorption members. Furthermore, the present paste containing the component (E), may be used as a heat dissipation paste between a heating element and a heat radiating part in, for example, electronic components and the heat dissipation paste may be used for applications where suppression of pump-out is extremely important.

In particular, the present paste containing the component (E) has a low initial viscosity and after heating, for example, suppresses pump-out, base oil bleeding out, solidification, and dripping, and since heat dissipation properties (thermal conductivity) can be maintained over a long period, the paste can be suitably used in, for example, devices, equipment, and components having a heating element and by using the present paste therein, for example, devices, equipment, and components having excellent long-term reliability can be obtained. In particular, since the paste has a low initial viscosity and conforms well with heating elements and heat radiating parts, a thin paste layer can be formed between the heating element and the heat radiating part, and since heat resistance due to the paste layer can be reduced, the paste can suitably be used as a heat dissipation paste provided between the heating element and the heat radiating part. Moreover, since the paste does not solidify, is hard to crack, and can absorb (suppress) vibrations, the paste can suitably be used as a heat dissipation paste for vehicles such as automobiles.

As a method for forming the present paste on a prescribed location, for example, applying the present paste to a prescribed location using a conventionally known coating method or a method involving pouring the present paste over the prescribed location can be cited. When the present paste is to be formed between two members, the present paste can be applied or poured between the members and thereafter, if deemed necessary, pressure may be applied while heating, as follows. For example, when the present paste is to be formed between a heating element and a heat radiating part, in consideration of heat resistance, the thickness of the formed present paste (layer) is preferably thin. Therefore, in such cases, after forming the present paste between the heating element and the heat radiating part, it is preferable to apply pressure thereto in order to expand the present paste.

By heating (heat thickening) the present paste that was formed, as previously described, at a prescribed location, the paste can be made to not migrate from the prescribed location where the paste was formed.

The heating temperature in such cases can be appropriately set according to each component used to prepare

the present paste, in particular the temperature can be appropriately set according to the type of the component (C) that is used; however, the temperature is preferably 80 to 200°C and more preferably 100 to 170°C.

## Examples

The following examples are used to describe the present invention in more detail but these examples do not set any limitations on the present invention.

[Examples 1 to 6 and comparative examples 1 to 4]

Pastes were prepared by mixing each of the components listed in Table 1 in the blending ratios (the units of the numerical values are in parts by mass) indicated in Table 1.

Each of the components listed in Table 1 are described below.

Perfluoropolyether 1: "X-71-8115A" manufactured by Shin-Etsu Chemical Co., Ltd. (perfluoropolyether having two or more ethylenically unsaturated bonds in the molecule and a viscosity at 23°C (measured with a Brookfield viscometer) of 4.3 Pa·s)

Perfluoropolyether 2: "X-71-6207 A)" manufactured by Shin-Etsu Chemical Co., Ltd. (perfluoropolyether having two or more ethylenically unsaturated bonds in the molecule and a viscosity at 23°C (measured with a Brookfield viscometer) of 25 Pa·s)

Polysiloxane 1: "KE-1950-10A" manufactured by Shin-Etsu Chemical Co., Ltd. (dimethylpolysiloxane having two or more ethylenically unsaturated bonds in the molecule and a viscosity at 23°C (measured with a Brookfield viscometer) of 60 Pa·s)

Polysiloxane 2: "KE-1950-30A" manufactured by Shin-Etsu Chemical Co., Ltd. (dimethylpolysiloxane having two or more ethylenically unsaturated bonds in the molecule and a viscosity at 23°C (measured with a Brookfield viscometer) of 250 Pa·s)

Compound (D)-1: "TAIC" manufactured by Mitsubishi Chemical Corporation (triallyl isocyanurate)
Compound (D)-2: "High Cross M" manufactured by Seiko Kagaku Co., Ltd. (trimethylolpropane tri(meth)acrylate)
Radical initiator: "Perhexa 25B" manufactured by NOF CORPORATION (peroxide)

<Initial viscosity>

The viscosity (initial viscosity) of the prepared paste at 23°C was measured with a Brookfield viscometer (manufactured by Brookfield). The results are shown in Table 1.

<Pot life>

The pot life (time taken for the viscosity to reach 500 Pa·s or more) at 23°C of a paste comprising a platinum catalyst is usually about 1008 hours; however, the paste obtained in Examples 1 to 6 exhibited a viscosity approximately the same as directly after preparation even after 1008 hours had passed. That is, it can be said that the paste obtained in Examples 1 to 6 have effectively no (i.e., extremely long) pot life.

<Thickening treatment method>

Approximately 5 g of the prepared paste was measured out in a beaker with a bottom of approximately φ 30mm, heated in air at 150°C for 15 minutes and then air cooled to lower the temperature to 23°C. After lowering the temperature, the paste was lightly kneaded in a mortar and the entirety thereof was blended together to form a thickened paste.

<Viscosity after thickening treatment>

The viscosity of the obtained thickened paste was measured with a Brookfield viscometer (manufactured by Brookfield). The measurement was performed at 23°C and 2 rpm. The results are shown in Table 1.

Note that the pastes obtained in Examples 5 and 6 were confirmed to be in a paste state (having fluidity) even after thickening treatment. However, the pastes obtained in comparative Examples 2 and 3 had been completely cured (solidified) and could not be described as pastes (no fluidity).

Note that whether the paste was paste state (presence of paste-like properties) or not was determined by compressing 0.2 g of the obtained paste at a pressure of 1 MPa at room temperature (23°C), and when the thickness became 200 μm or less, the sample was determined to be paste state ("Yes" for presence of paste-like properties). The

conditions for compression, for example, are as described below.

Compression of the sample was performed by stretching the sample to approximately 5 mm square on a metal disk then sandwiching the sample with one more metal disk and tightening a screw with a torque wrench to apply a prescribed load on the sample.

To measure the thickness, 2 stacked metal discs under a load of 1 MPa were prepared in advance and the end-to-end thickness (thickness without the sample) of the 2 metal discs was measured, the end-to-end thickness (thickness including the sample) of the 2 metal discs sandwiching the sample was measured, and the thickness without the sample was subtracted from the thickness including the sample.

Note that, a variation in thickness due to compression was taken into account and measurement of thickness was performed 3 minutes after compression.

A pressure sample holder (flash analyzer LFA467 accessory manufactured by Netch Japan Co., Ltd) and a torque wrench were used when the pressure was applied and a Lightmatic VL-50 (manufactured by Mitutoyo Co., Ltd.) was used to measure the thickness. For the metal disc, SUS304 was used as the material, the diameter was 14 mm, the thickness was 3 mm, and the surface roughness Ra was 0.2.

<Heat resistance>

As an index of heat resistance, whether the prepared paste had paste-like properties after heat deterioration was evaluated by the following method. The results are shown in Table 1.

The prepared paste was thickened by the same method as used in the thickening treatment method, 2 g of the paste was thereafter measured out on a metal plate and heat deteriorated at 300°C for 24 hours. Whether the sample exhibited paste-like properties after heat deterioration (whether the sample after heat deterioration was a paste or not) was confirmed in a similar manner to before.

Table 1

| | Example 1 | Example 2 | Example 3 | Example 4 | Example 5 | Example 6 |
|---|---|---|---|---|---|---|
| Perfluoropolyether 1 | 10 | 5 | | 10 | 10 | 10 |
| Perfluoropolyether 2 | | | 10 | | | |
| Polysiloxane 1 | 1 | 5 | 1 | | 1 | 1 |
| Polysiloxane 2 | | | | 1 | | |
| Compound (D)-1 | | | | | 0.1 | |
| Compound (D)-2 | | | | | | 0.1 |
| Radical initiator | 1 | 0.1 | 1 | 1 | 1 | 1 |
| Initial viscosity (Pa·s) | 7.62 | 42.1 | 26.1 | 10.7 | 8.04 | 8.19 |
| Viscosity after thickening treatment (Pa·s) 150°C x 15 min | 52.1 | 310 | 211 | 92.7 | >8000 (Above upper limit of measurement) | >8000 (Above upper limit of measurement) |
| Heat resistant Has paste-like properties 300°C x 24 hr | Yes | Yes | Yes | Yes | Yes | Yes |

Table 1 (continued)

| | Comparative Example 1 | Comparative Example 2 | Comparative Example 3 | Comparative Example 4 |
|---|---|---|---|---|
| Perfluoropolyether 1 | 11 | | | |
| Perfluoropolyether 2 | | | | |
| Polysiloxane 1 | | 11 | 11 | 11 |
| Polysiloxane 2 | | | | |
| Compound (D)-1 | 0.1 | | | |
| Compound (D)-2 | | | | |
| Radical initiator | 1 | 1 | 0.5 | 0.1 |
| Initial viscosity (Pa·s) | 3.2 | 58.4 | 59.1 | 60.2 |
| Viscosity after thickening treatment (Pa·s) 150°C x 15 min | 34.8 | Not measurable (cured) | Not measurable (cured) | 322 |
| Heat resistant Has paste-like properties 300°C x 24 hr | Yes | No | No | No |

[Example 7 and Comparative Examples 5 and 6]

The pastes were prepared by mixing each component in Table 2 in the blending ratios indicated in Table 2 (the units of the numerical values are in parts by mass).
The thermally conductive filler in Table 2 is as described below. The other components in Table 2 are the same as in Table 1.
Thermally conductive filler: "Advanced Alumina AA1.5" manufactured by Sumitomo Chemical Co., Ltd. (alumina)
The prepared paste was used, and in the same manner as for Example 1, the initial viscosity, the viscosity after thickening treatment, and heat resistance were evaluated. The results are shown in Table 2.
The paste obtained in Example 7, in a similar manner to the pastes obtained in Examples 5 and 6, was confirmed to be in a paste state (having fluidity) even after thickening treatment. However, the paste obtained in comparative example 5 had been completely cured (solidified) and could not be said to be a paste (no fluidity).
Note that the paste obtained in Example 7 exhibited a viscosity approximately the same as directly after preparation thereof even after 1008 hours had passed. That is, the paste obtained in Example 7 has effectively no (i.e., extremely long) pot life.

<Thermal resistance value>

As an index of heat dissipation properties, the thermal resistance values of the prepared pastes were evaluated by the following method.
0.1 g of paste was applied to a heat generating substrate made of gold-plated copper (length 10 mm × width 10 mm) and a substrate made of the same material as the heat generating substrate (cooling substrate) was placed on the applied paste and compressed with a constant load (approximately 100 kPa). While the load was being applied and the temperature of the sides of both substrates in contact with the paste was being monitored, the heat generating substrate was heated at a heating value of approximately 20 W. The temperature of both substrates was measured 5 minutes after the start of heating, that is, the temperature of the side of the heat generating substrate in contact with the paste (temperature of the heat generating part: θj1) and the temperature of the side of the cooling substrate in contact with the paste (temperature of the cooling part: θj0) were measured, the measured values were applied to the following formula, and heat resistance was calculated. The results are shown in Table 2.

$$\text{Heat resistance } (mm^2K/W) = (\theta j1 - \theta j0) \times 100/\text{heating value } Q$$

<Thermal resistance value after thermal deterioration>

As an index of heat resistance, the thermal resistance value of the prepared paste after heat deterioration was evaluated with the following method.

5 g of the prepared paste was measured out on a metal plate, heated in air at 150°C for 15 minutes and thickened. Next, this thickened sample was heat deteriorated in air at 300°C for 24 hours then air cooled to lower the temperature to 23°C. The heat resistance value of the resulting sample was then measured in the same manner as previously described. The results are shown in Table 2.

[Table 2]

Table 2

| | Example 5 | Example 7 | Comparative Example 5 | Comparative Example 6 |
|---|---|---|---|---|
| Perfluoropolyether 1 | 10 | 10 | | |
| Polysiloxane 1 | 1 | 1 | 11 | 11 |
| Compound (D)-1 | 0.1 | 0.1 | | |
| Thermally conductive filler | | 10 | 10 | 10 |
| Radical initiator | 1 | 1 | 1 | 0.1 |
| Initial viscosity (Pa·s) | 8.04 | 112 | 121 | 122 |
| Viscosity after thickening treatment (Pa·s) 150°C × 15 min | >8000 (Above upper limit of measurement) | >8000 (Above upper limit of measurement) | Not measurable (cured) | 3650 |
| Heat resistant Has paste-like properties 300°C × 24 hr | Yes | Yes | No | No |
| Thermal resistance value ($mm^2$ K/W) | 53.1 | 26.6 | 23.8 | 23.2 |
| Thermal resistance value after thermal deterioration ($mm^2$ K/W) 300°C × 24 hr | 325.7 | 33.4 | Not measurable (curing deterioration) | Not measurable (curing deterioration) |

## Claims

1. A paste comprising a perfluoropolyether (A) having two or more ethylenically unsaturated bonds in the molecule, a polysiloxane (B) having two or more ethylenically unsaturated bonds in the molecule, and a radical initiator (C).

2. The paste according to claim 1, wherein the content of the perfluoropolyether (A) is 30 to 96% by mass with respect to a total 100% by mass of the content of the perfluoropolyether (A) and the polysiloxane (B).

3. The paste according to claim 1, comprising a compound (D) having two or more ethylenically unsaturated bonds in the molecule, wherein the compound (D) is other than the perfluoropolyether (A) and the polysiloxane (B).

4. The paste according to any one of claims 1 to 3, comprising a thermally conductive filler (E).

5. The paste according to any one of claims 1 to 4, wherein the viscosity measured at 23°C with a Brookfield viscometer is 500 Pa·s or less.

## INTERNATIONAL SEARCH REPORT

International application No.
PCT/JP2021/009724

A. CLASSIFICATION OF SUBJECT MATTER
C08F 299/08(2006.01)i; C10M 107/38(2006.01)i; C10M 107/50(2006.01)i; C09K 5/14(2006.01)i
FI: C08F299/08; C10M107/38; C10M107/50; C09K5/14 101

According to International Patent Classification (IPC) or to both national classification and IPC

B. FIELDS SEARCHED

Minimum documentation searched (classification system followed by classification symbols)
C08F299/08; C10M107/38; C10M107/50; C09K5/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2016-523311 A (3M INNOVATIVE PROPERTIES COMPANY) 08 August 2016 (2016-08-08) claims 1-17, paragraphs [0053], [0056], [0058], [0065]-[0066], [0095]-[0117], examples 4-9 | 1-5 |
| X | JP 2016-065131 A (FUJI XEROX CO., LTD.) 28 April 2016 (2016-04-28) claims 1-2, paragraphs [0088]-[0089], [0094]-[0098], [0126]-[0133], [0136], [0166]-[0177], [0216]-[0241], S2, S3, S4, S6, S8, S9, B2, B3, B4 | 1-5 |

☐ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 May 2021 (18.05.2021) | 01 June 2021 (01.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/009724

| Patent Documents referred in the Report | Publication Date | Patent Family | Publication Date |
|---|---|---|---|
| JP 2016-523311 A | 08 Aug. 2016 | US 2016/0145433 A1 claims 18-31, paragraphs [0063], [0066], [0068], [0075]-[0076], [0124]-[0143], examples 4-9<br>WO 2014/209635 A1<br>CN 105324412 A<br>KR 10-2016-0024939 A | |
| JP 2016-065131 A | 28 Apr. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013227374 A
- JP 2017165791 A
- JP 2003183402 A
- JP H11116684 B
- JP H11116685 B
- JP 2015067737 A